# EUROPEAN PATENT APPLICATION

(11) **EP 4 534 236 A1**
(43) Date of publication of application: **09.04.2025**
(21) Application number: 24204712.4
(22) Date of filing: 04.10.2024
(51) Int. Cl.: B23K 37/04, B23K 37/06, B23Q 1/01, B23Q 3/10, B23K 7/10, B23K 26/70

(54) **SLAT FOR A LASER/PLASMA/FLAME CUTTING TABLE**

(30) Priority: 04.10.2023 NL 2035954
(71) Applicant: Pyrodura B.V., 6003 DB Weert (NL)
(72) Inventor: DRIESSEN, Antonius Hendrikus Hubertus Cornelis, WEERT (NL)
(74) Representative: Algemeen Octrooi- en Merkenbureau B.V.

(57) **Abstract**

Slat (3) for a slats table (1) of a laser/plasma/flame cutting machine, the slats table (1) comprising a plurality of parallel extending slats (3) held adjacent to one another for supporting a metal object (5), wherein the top side (7) of the slats (3) are provided with crests (23) and troughs (26) providing a plurality of points or tips (9) in the height direction (H) forming a line of tips (8) at regular mutual distance in the length direction (X) of the slats, the plurality of tips (9) being able to support the metal object (5) to be cut, wherein the slats (3) are manufactured from a non-metal, non-flammable, heat- and fire-resistant, durable, sturdy and dimensionally stable laminated composite material comprising a mixture of glass fibre and/or glass fabric with a resin.

## Description

According to a first aspect, the present disclosure relates to a slat for a slats table of a laser/plasma/flame cutting machine, the slats table comprising a plurality of parallel extending slats held adjacent to one another for supporting a metal object to be cut by the laser/plasma/flame cutting machine, the slat being an oblong sheet of material having a substantially constant thickness, the slat comprising a front side and a back side, a bottom side and a top side, and a left side and a right side, wherein the top side of the slat is arranged to support the object to be cut by the laser/plasma/flame cutting machine, by providing the top side of the slat with crests and troughs providing a plurality of tips or points in the height direction forming a line of tips at regular mutual distance in the length direction, the plurality of tips being able to support the metal object to be cut.

A laser/plasma/flame cutting machine uses a laser/plasma or flame cutting to cut materials, like metal objects. Laser/plasma/flame optics and CNC (computer numerical control) are used to direct the laser/plasma/flame beam to the material. Generally, a motion control system guides the laser/plasma/flame beam in a pattern to be cut onto the material. The focused laser/plasma/flame beam is directed at the material, which then either melts, burns or vaporizes away, leaving an edge with a high-quality surface finish.

During the laser/plasma/flame cutting process, usually the object to be cut is disposed on, and supported by, a slats table, comprising a plurality of parallel slats. The slats are commonly manufactured from metals like steel, stainless steel, aluminium or copper. The object to be cut is supported by a plurality of tips or points at the top side of the slats, so that cutting effluent from the laser/plasma/flame cutting like glowing particles is prevented to interact with the slats and will fall between the slats into a cutting effluent receiving receptacle, like an ash pan.

Despite the minimised contact between the slats, the object to be cut and the laser/plasma/flame beam, the slats are subject to contamination and wear, so that the slats usually are cleaned every week and are all renewed by replacement 8-10 times per year. This leads to considerable costs for maintenance of the slats table.

Object of the present disclosure is therefore to extend the service life of the slats in the slats table, to reduce the time and cost for cleaning the slats, and to improve the production time of the laser/plasma/flame cutting machine.

These objects are achieved with the slats of the present disclosure, wherein the slat is manufactured from a non-metal, non-flammable, heat- and fire-resistant, durable, sturdy and dimensionally stable laminated composite material comprising a mixture of glass fibre and/or glass fabric with a resin. It has been found, that by manufacturing the slat from a laminated composite material comprising glass fibre and/or glass fabric with a resin, sintering of the cutting effluent of the laser/plasma/flame cutting is significantly reduced at the tips of the top side of the slat, and also at its front side and back side, so that a longer service time is achieved and also an increased interval between cleaning work.

Surprisingly it has been found, that, when for the resin a phenolic resin or an unsaturated polyester resin is chosen, the laminated composite material is non-flammable, heat- and fire-resistant, durable, sturdy and dimensionally stable and also resistant to a short irradiation by a laser/plasma/flame beam during the laser/plasma/flame cutting process, and moreover, the cutting effluent of the laser/plasma/flame cutting process is much less accumulating onto the slat, compared to metal slat, resulting in less frequent cleaning and a longer service life.

Also, when choosing for the resin a composite material comprising lime or chalk, good results were obtained with slats in the slats table.

In an alternative embodiment, at least a portion of the slat is coated with a ceramic material; preferably the tips on the top side of the slat are coated with the ceramic material. Particularly, the ceramic material is an inorganic, metallic oxide, nitride, or carbide material. Providing ceramic material improves the service time of the laminated composite material by enhancing the heat resistance and resistance to heat cutting resulting in a reduction of wear, and of contamination by cutting effluent.

In another alternative embodiment, at least a portion of the surface of the slat is sanded. It has been found, that a sanded surface contaminates less easily having the effect of less material sintering on the slat, and that also means that the resistance to heat cutting slightly improved.

According to a second aspect, the present disclosure relates to a slats table comprising a plurality of parallel extending slats held adjacent to one another for supporting a metal object to be cut by a laser/plasma/flame beam, the slats table comprising at least one slat according to the first aspect of the present disclosure.

Preferably, the slats are provided at a mutual distance in the range of 10 - 500 mm. Furthermore, the slats are oriented perpendicular to the direction of the displacement into the laser/plasma/flame cutting machine.
- Fig. 1A:: shows an isometric view of a slats table of the present disclosure;
- Fig. 1B:: shows detail A of Fig. 1A;
- Fig. 1C:: shows a side view of Fig. 1A;
- Fig. 2A:: shows an isometric view of a slat of the present disclosure;
- Fig. 2B:: shows a side view of Fig. 2A;
- Fig. 2C:: shows detail B of Fig. 2B.

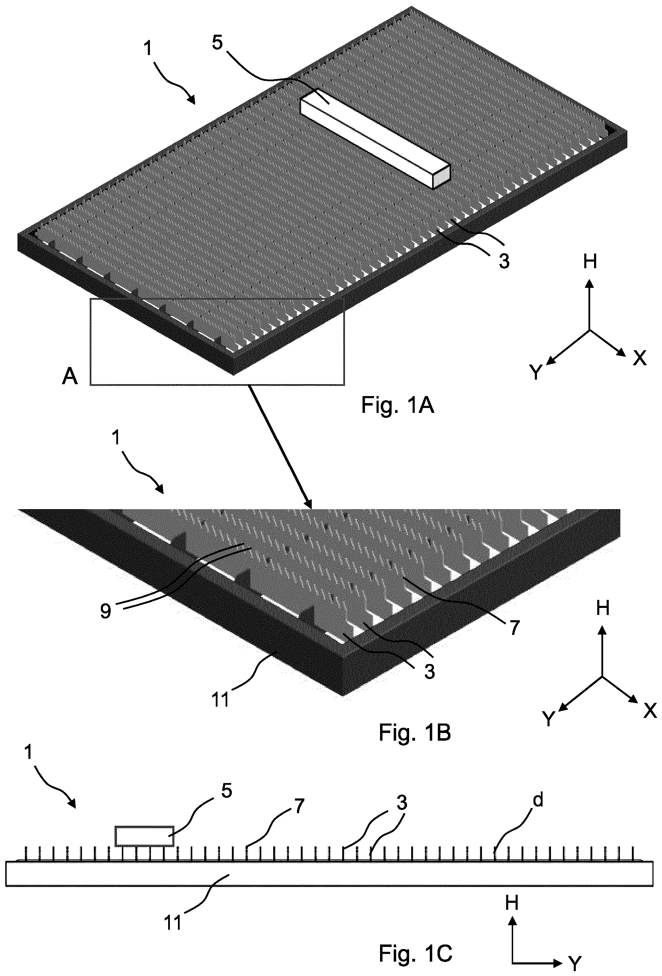

A slats table 1 of a laser/plasma/flame cutting machine according to the second aspect of the present disclosure is shown in Fig. 1A, the slats table 1 comprising a plurality of parallel extending slats 3 held adjacent to one another for supporting a metal object 5 to be cut by the laser/plasma/flame beam. By displacing the slats table 1 into the laser/plasma/flame cutting machine, the object can be cut by the laser/plasma/flame beam. After the laser/plasma/flame cutting process, the slats table is displaced out of the laser/plasma/flame cutting machine, and the cut object can be removed and a next object can be positioned on the slats table for laser/plasma/flame cutting. The slats 3 are oblong sheets of material extending in the length direction X, having a substantially constant thickness d in the width direction Y. The thickness of the slats is chosen in the range of 0.1 - 50 mm. The slats 3 are provided at a mutual distance in the width direction Y in the range of 10 - 500 mm, so that cutting effluent from the laser/plasma/flame cutting process is able to fall between the slats 3 in a cutting effluent receiving receptacle, e.g. an ashpan (not shown). The contact surface of the slats with the object 5 to be cut is minimised, by providing the top side 7 in the height direction H of the slats 3 with point-shaped tops or tips 9. Now, the contamination and wear of the slats is minimised, however cleaning is required every week, and every 8 - 10 weeks the slats have to be replaced.

Fig. 1B shows detail A of Fig. 1A with the points or tips 9 at the top side 7 of the slats 3. The slats 3 are held in a frame 11 of the slats table 1.

Fig. 1C shows the slats table 1 of Fig. 1A in side view. The slats 3 are arranged such within the frame 11 of the slats table 1, that the top side 7 and the points 9 are all flush, at the same height in the height direction H, so that the object 5 is supported upon the slats 3 in a horizontally flat orientation. Preferably a large portion of the mounted slats 3 is identical, commonly all slats 3 are identical, however occasionally differently shaped slats are applied in the slats table 1.

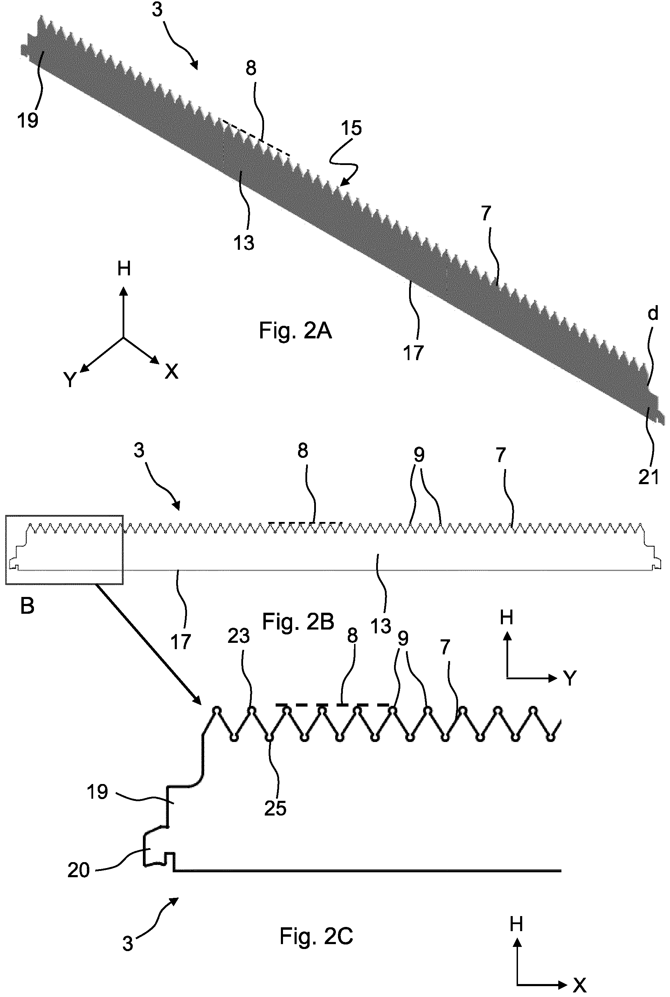

Fig. 2A shows one slat 3 of the slats table 1 of Fig's 1A - 1C. The slat 3 is an oblong sheet of material essentially extending in the length direction X. The slat 3 comprises a front side 13 and a back side 15, a bottom side 17 and a top side 7, and a left side 19 and a right side 21, wherein the top side 7 of the slat 3 is arranged to support an object to be cut by the laser/plasma/flame beam. The top side of the slat 3 is provided with crests and troughs, or a zigzag shape, providing a plurality of points or tips 9 in the height direction H, forming a line of tips 8 at regular (or even equal) mutual distance in the length direction X of the slat. The plurality of tips 9 at the top side 7 of the slat 3 serve as support for a (metal) object to be cut by a laser/plasma/flame beam.

Fig. 2B shows a side view of the slat 3 of Fig. 2A with front side 13, top side 7, bottom side 17, the plurality of tips 9 forming a line of tips 8 at regular mutual distance in the length direction X of the slat; and Fig. 2C shows detail B of Fig. 2B with the zigzag form, with crests 23 and troughs 25 of the top side 7, creating the plurality of tips 9 in a line of tips 8, for contacting and supporting an object to be cut by the laser/plasma/flame beam. Fig. 1C shows the left side 19 of the slat 3, with mounting elements 20, for mounting the slat 3 to the frame 11 of the slats table 1 (see Fig. 1B, 1C).

During laser/plasma/flame cutting of an metal object, which is supported on the tips 9 of the slats 3, the cutting effluent of melted, burned, vaporised material of the object is interacting with the metal slats, depositing on and sintering with the slats, so that a thick layer of solidified or sintered material from the object is deposited on the slats, in particular on the tips 9 at the top side 7 of the slats. Furthermore the top side of the slats wears down because of the laser/plasma/flame beam hitting the slats for a short period of time during cutting the object.

To overcome the aforementioned drawbacks of the common metal slats, in a first embodiment, the slats are manufactured from a non-metal, non-flammable, heat- and fire-resistant, durable, sturdy and dimensionally stable laminated composite material comprising a mixture of glass fibre and/or glass fabric with a resin. Good results were obtained with a resin based on phenolic resin or with an unsaturated polyester resin. Optionally, other polymers are used or added. This laminated composite material is resistant to heating by the laser/plasma/flame beam and its surface does not interact with the cutting effluent, so that significantly less material is deposited during laser/plasma/flame cutting of an object.

In another embodiment, the resin is a composite material comprising lime or chalk, which composite material is more resistant to the laser/plasma/flame beam and wears less quickly, and contamination with cutting effluent is also reduced.

To further reduce wear of the slats, a portion of the slat is coated with a ceramic material; preferably the tips 9 on the top side of the slats are coated with ceramic material. Good results were obtained with ceramic material being an inorganic, metallic oxide, nitride, or carbide material.

In an alternative embodiment, the surface of the front side 13 and the back side 15 of the slat is sanded, having the effect of less material sintering on the slat, so that cleaning interval and replacement interval of the slats table 1 both increases.

Additionally, fillers and/or minerals can be added to further increase heat resistance and mechanical strength. Also heat-resistant stabilizers can be added to protect the resin(s) and/or polymer(s) from thermal degradation. Flame retardants can be added to reduce flammability of the composite material.

To improve the processability of the resin optionally lubricants are added.

## Claims

1. Slat (3) for a slats table (1) of a laser/plasma/flame cutting machine, the slats table (1) comprising a plurality of parallel extending slats (3) held adjacent to one another for supporting a metal object (5) to be cut by a laser/plasma/flame beam, the slat (3) being an oblong sheet of material having a substantially constant thickness (d), the slat (3) comprising a front side (13) and a back side (15), a bottom side (17) and a top side (7), and a left side (19) and a right side (21), wherein the top side (7) of the slat (3) is arranged to support the object (5) to be cut by the laser/plasma/flame cutting machine, by providing the top side (7) of the slat (3) with crests (23) and troughs (26) providing a plurality of points or tips (9) in the height direction (H) forming a line of tips (8) at regular mutual distance in the length direction (X) of the slat, the plurality of tips (9) being able to support the metal object (5) to be cut,
**characterised, in that** the slat (3) is manufactured from a non-metal, non-flammable, heat- and fire-resistant, durable, sturdy and dimensionally stable laminated composite material comprising a mixture of glass fibre and/or glass fabric with a resin.

2. Slat according to claim 1, wherein the resin is chosen from phenolic resin or unsaturated polyester resin.

3. Slat according to claim 1, wherein the resin is a composite material comprising lime or chalk.

4. Slat according to claim 1-3, wherein at least a portion of the slat (3) is coated with a ceramic material.

5. Slat according to claim 4, wherein the tips (9) on the top side (7) of the slat (3) are coated with the ceramic material.

6. Slat according to claim 4-5, wherein the ceramic material is an inorganic, metallic oxide, nitride, or carbide material.

7. Slat according to claim 1-3, wherein at least a portion of the surface of the slat is sanded.

8. Slats table (1) comprising a plurality of parallel extending slats (3) held adjacent to one another for supporting a metal object (5) to be cut by a laser/plasma/flame beam, wherein the slats table comprises at least one slat (3) according to claim 1 - 7.

9. Slats table (1) according to claim 8, wherein the slats (3) are provided at a mutual distance in the range of 10 - 500 mm.

10. Slats table (1) according to claim 8 - 9, wherein the slats (3) are oriented perpendicular to the direction of the displacement into the laser/plasma/flame cutting machine.
